# EUROPEAN PATENT SPECIFICATION

(11) **EP 0 431 127 B1**
(45) Date of publication and mention of the grant of the patent: **03.02.1999**
(21) Application number: 90909814.7
(22) Date of filing: 18.06.1990
(51) Int. Cl.: A01K 31/06

(54) **HOLDING DEVICE**
HALTEVORRICHTUNG
DISPOSITIF DE MAINTIEN

(30) Priority: 16.06.1989 SE 8902193; 19.09.1989 SE 8903069
(43) Date of publication of application: 12.06.1991
(73) Proprietor: Sterner, Olle, 331 53 Värnamo (SE)
(72) Inventor: Sterner, Olle, 331 53 Värnamo (SE)
(74) Representative: Engström, Christer
(86) International application number: SE9000443
(87) International publication number: WO9015529

(56) References cited:
- CH-A- 0 670 032
- GB-A- 0 387 423
- US-A- 0 638 108

## Description

The present invention relates to an arrangement in such installations for holding poultry where poultry are able to be on stages above a foundation and comprising beams, laths or similar which, in the arrangement, are intended to form at least one stage on which poultry can be, a frame comprising posts, which, in the arrangement, are intended to be arranged at a distance from one another and in applicable cases means for collection of manure and other waste from at least one stage, that said beams, laths or similar are to be united at relative distances from one another to form a unit in form of an element, wherein the arrangement comprises two or more such units which, in the arrangement, are arranged in the frame one after the other and/or above one another, that each unit or element is supported by the frame along at least two opposite sides of the unit or element.

There is a need for a new kind of plant and installation for holding poultry which allows the poultry to move freely within the space allotted them and have a choice of places to be even above the bottom or floor of the area and thereby at various heights in the area. For this an arrangement is required. Another requirement is that the arrangement should be formed in such a way that it enables the poultry to find the various places to be, which corresponds with the nature of the poultry over a daily cycle, and that the poultry in this way can move between the various places to stay in a natural and trouble-free way and without risk of injury. An improvement in hygienic conditions in arrangements and installations of the type in question is another requirement. For this purpose the requirement is to produce housing for the poultry which offers several different places for the poultry to be and move about, and which is safe and can be kept hygienic while at the same time encroaching as little as possible on the space where the poultry are or preventing them from moving freely between the various places they wish to occupy. With egg production a need exists for the poultry to move between the various places without disturbing the egg laying nest of the poultry.

For example, within the poultry industry in breeding poultry and egg production, it has been the custom to keep poultry in cages. In breeding, there also exist installations where poultry can move freely on a floor, with installations for the consumption of food and water and, by the side of these installations, an arranged frame with roosts for the poultry to sit and rest on. Such plants require a lot of space without giving the poultry greater room to move in. Furthermore the upkeep of maintaining hygienic conditions is relatively involved and manpower-intensive. In CH-A-665 749 an arrangement for stage breeding of poultry is proposed. The arrangement shows a frame with, centrally in the frame and following one another, vertical posts, with projecting beams arranged in two opposite directions on which roosts for the poultry are arranged. The projecting beams are arranged in pairs at various heights and arranged in such a way that they project in alternate directions to form stages at different levels. In this way the roosts are located on one side of the vertical posts on one stage and on the other side of the vertical posts on the next stage and so on. This should enable the poultry to hop up onto the first stage from the foundation and then hop from one side of the vertical posts to the other until the top stage is reached. Under each stage is an area for collecting manure and under the whole frame, and in the width and length of the stage, is an arrangement for removing the manure. The areas are similarly arranged on projecting beams from the vertical posts. However, this arrangement shows a number of limitations and disadvantages for the poultry. The arrangement is certainly formed so that the height of the space can be utilized and thereby more poultry per floor surface can be kept than would otherwise be the case, but the arrangement can, because of its shape, still only hold a limited or smaller number of poultry. With such a design the vertical posts and the projecting beams must be large in size, which means extensive material consumption and thereby also an expensive arrangement, in addition to which it also involves an unstable arrangement. The projecting beams are, of course, only fixed at one end in the arrangement. Furthermore, it is difficult to adapt the arrangement to the actual needs. Each stage forms a surface, which consists of a coarse-meshed net, like a bottom surface in the arrangement, by which the manure can fall down onto the mentioned areas and onto the manure removal arrangement. Since it is less pleasant for the poultry to be on the coarse-meshed net, two longitudinal roosts are arranged on the coarse-meshed net on each stage. Despite each stage having a relatively large surface, the poultry are reduced to being on the two roosts, which can only lodge a limited number of poultry. Furthermore, the roosts are arranged at a distance from the longitudinal edges of the stage, by which the starting point for moving from one stage to another cannot be attained from a roost. Since the roosts are situated over the stage the poultry must climb over the roosts when moving and taking up other positions. In addition to which, the customary feed pans cannot be used for feeding the poultry. For this reason a longitudinal feeding-trough is arranged between the two roosts on every stage, which in addition to the roosts also obstructs free movement for the poultry in the arrangement. The manure which has collected on the areas mentioned under the stage demands manual or mechanical handling, such as a mechanical scraper on each area. The manure is scraped to the inner edge of the area so that it falls onto the net on the bottom surface, where it is collected in large heaps in a longitudinal line in the middle of the bottom surface. The manure is then trodden down by the poultry to the manure collecting arrangement lying below which, as has been mentioned, has a considerably larger collection width than the mentioned line of manure, namely a width as wide as that of the arrangement. In addition to obtaining a central accumulation of a lot of manure, the manure also gets caught in the edges of the areas mentioned and hangs from the edges and so makes the poultry dirty. Thus, the poultry get manure on their backs when they hop from stage to stage. In addition, there is a risk of the poultry trying to utilize the area for manure collection as a place to be. Accordingly the existing arrangement is not either particularly hygienic. Taking into account the limited number of poultry which can be kept in the arrangement, the arrangement is space consuming and must be unnecessarily amply dimensioned, plus having an unnecessarily extensive arrangement for handling manure. CH-A-670 032 shows an installation for holding poultry, including egg laying nests. From a roost plane there are two stages at different height and according to another embodiment the installation can be doubled with a serving path between two tiers of stages. The poultry cannot move freely between the stages of the two tiers as there is a net preventing the poultry from moving between the tiers. To move from one part of the installation to another the poultry have to go from the roost plane on one side of the installation to the two stages on the same side of the installation and then jump over feeding trays and then to the stages at the other side of the installation.

However, an arrangement in accordance with the present invention fulfils the set requirements while, at the same time, the disadvantages of known arrangements are eliminated. Thus, the arrangement is adapted to the behaviour and natural movement of the poultry and is easily adaptable to the space, need and number of poultry which are to be kept in the arrangement. The arrangement comprises stages which, like the rest of the arrangement, have been formed on a basis of a pleasant, safe and hygienic residence for the poultry. On the stages the poultry can move freely and move to another stage without obstruction and without risk of getting dirty and without disturbing poultry which are in egg laying nests, the latter essentially eliminating the risk of eggs on the floor. In each stage there are roosts to suit the poultry, between which the poultry can move in an agreeable and safe manner. The poultry can start from such a roost for example when moving to another stage. Since the roosts are arranged on a level with the stage the usual feeding pans and other usual equipment can be utilized without disadvantage. Furthermore, the stages are formed as individual elements, which can be hung or laid in a frame, which in its turn can be shaped or adapted according to the existing conditions and requirements. Limitations in size and capacity of the arrangement do not lay in the arrangement itself which can thus be adapted to suit the need, being increased or reduced accordingly. When using the arrangement, space for keeping poultry can be utilized in a better way without restricting the poultry's freedom of movement. The arrangement can be constructed entirely from parts and assembled at the place of use or constructed more or less prefabricated. Since the arrangement is simple in its design it can be assembled by anyone using simple, commonly used tools, as can also for example additions for extending it. In addition to the arrangement being adapted to the poultry, it requires minimal maintenance and is designed so that a high standard of hygiene can be maintained, which demands i.a. that the arrangement has a suitable construction, not just overall but also in detail. Despite this, the arrangement is formed of a simple and minimal structure, which is strong, firm and has bearing capacity and can be produced and assembled at relatively low cost. By means of an arrangement in accordance with the invention, more poultry can be kept per surface unit than with known arrangements and plants and thereby with a pleasant and safe residence for the poultry and under improved hygienic conditions. The arrangement is characterized in that at least two adjacent frames with units or elements are comprised in the arrangement and placed beside or on the side of one another and at a distance from one another, whereby at least one element in one frame is arranged at a certain height above the foundation, while at least one or preferably two elements in the second frame is/are arranged at another height above the foundation so that at least one element in one frame is at a different height above the foundation than the element or elements in an adjacent frame.

In an embodiment of the arrangement, in accordance with the invention, two frames are arranged at a distance from each other forming an interspace between the frames which can be used by the poultry to allow movement between different stages in the arrangement.

According to another embodiment of the arrangement, in accordance with the invention, at least two frames with stages or elements or units of elements should be used in the arrangement and which frames are intended to be connected with each other, whereby in two connected frames, posts along one side or an outer side of the stage are arranged to support against the foundation, while the lower end or end part of the posts along the other side or an inner side of the stage is arranged at a distance from the foundation.

In a further embodiment of the arrangement, in accordance with the invention, roosts are included in the element which is to form a stage or part of a stage and which roosts together with any beams, laths and/or similar form a plane for the poultry to be.

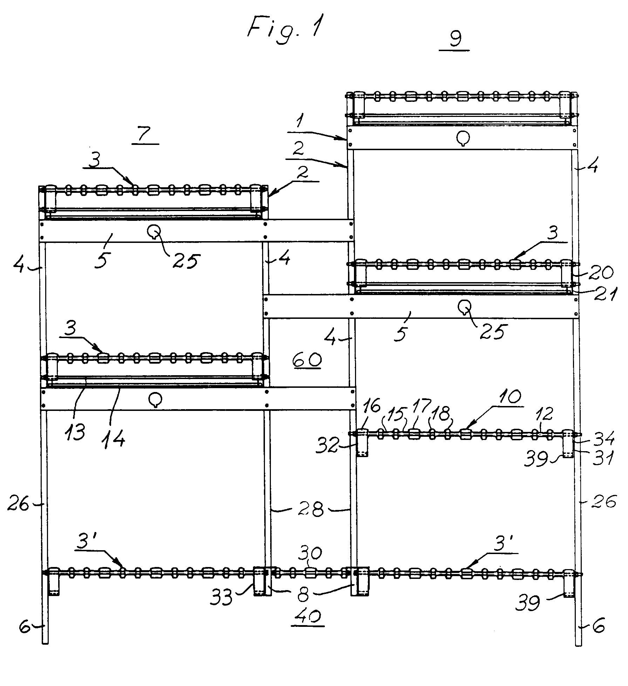

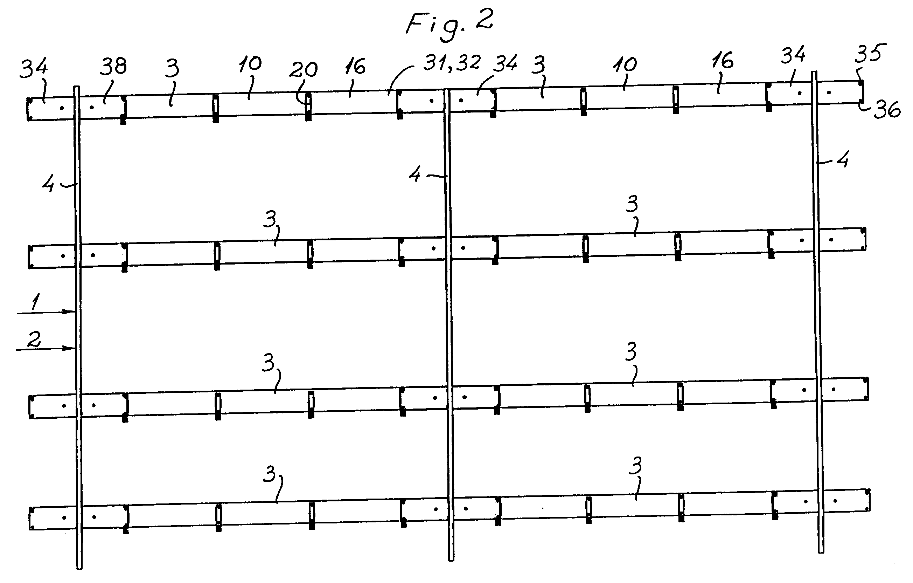

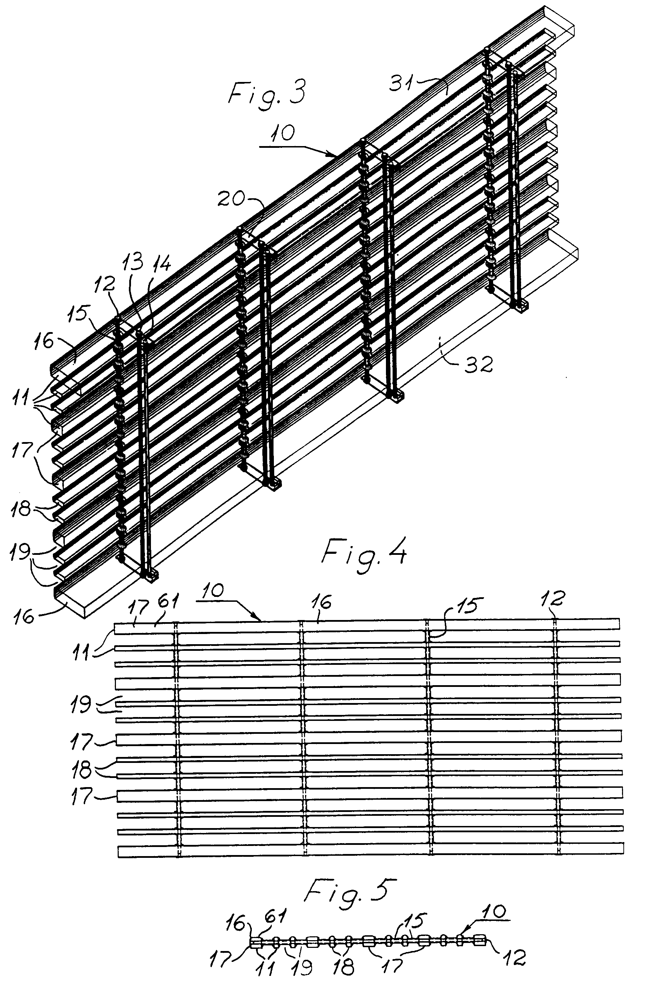

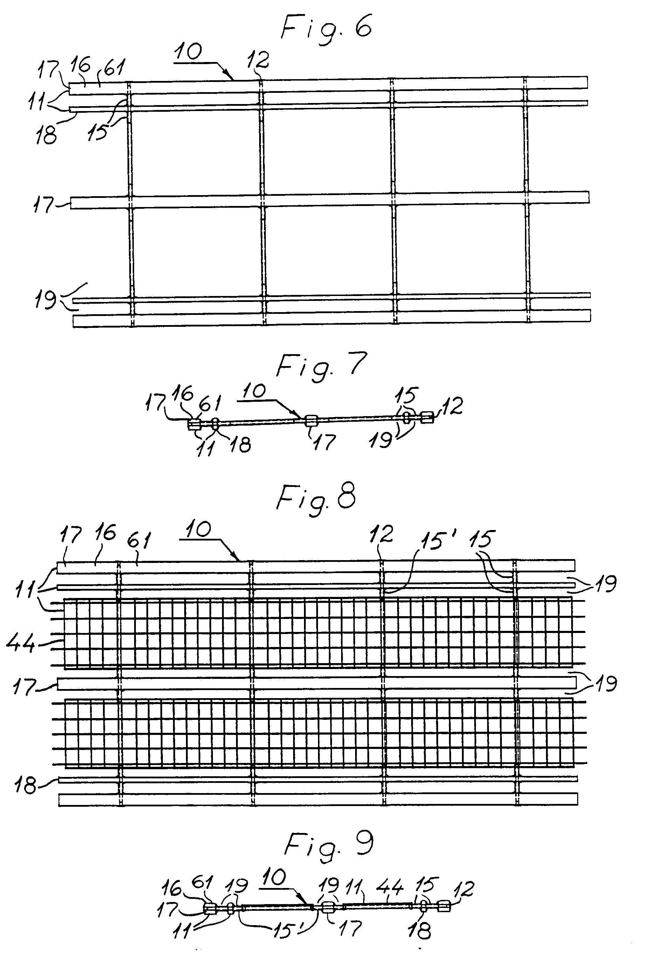

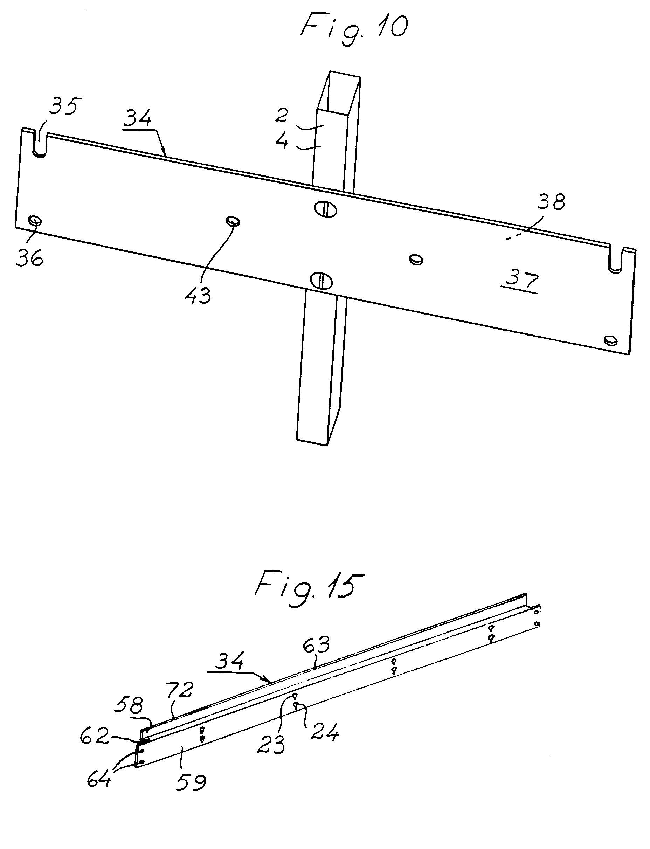

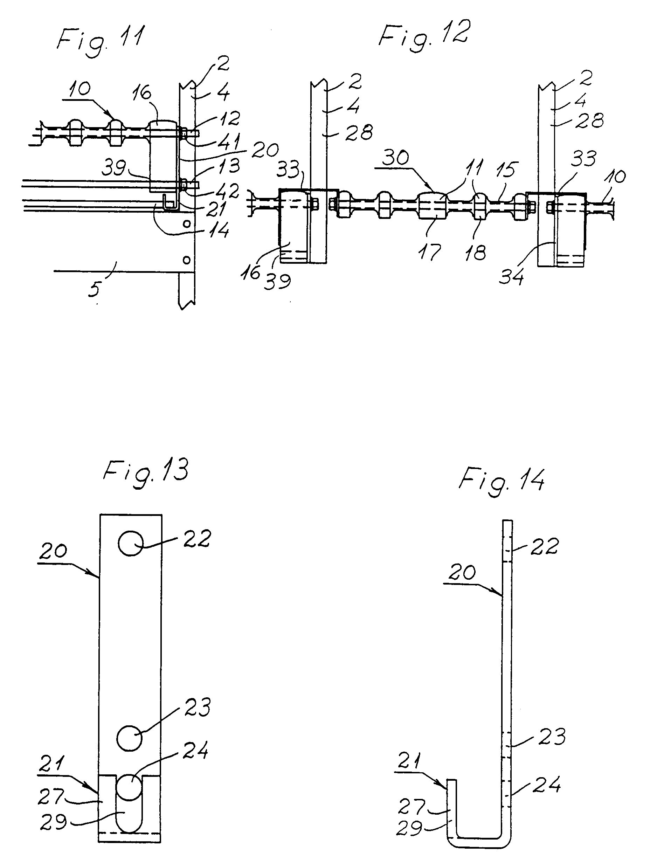

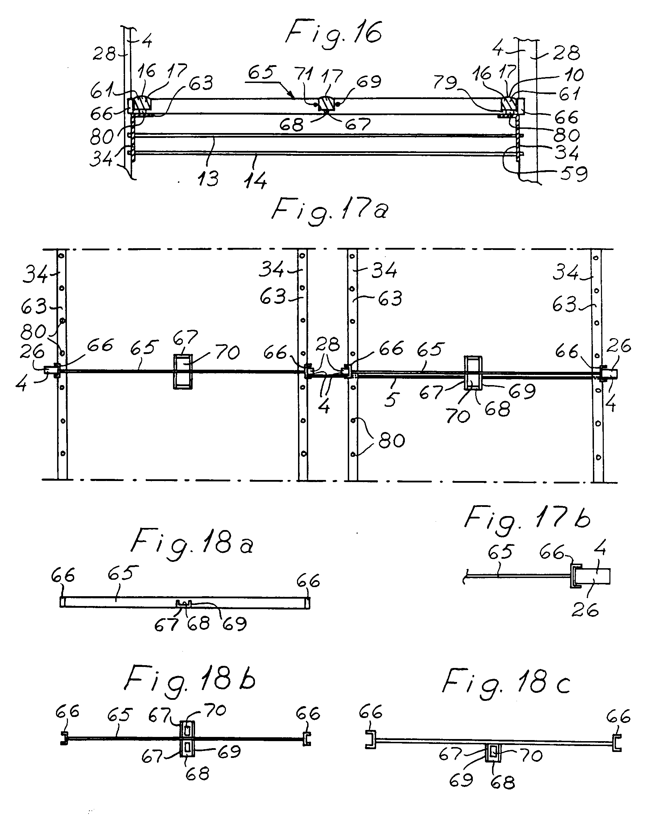

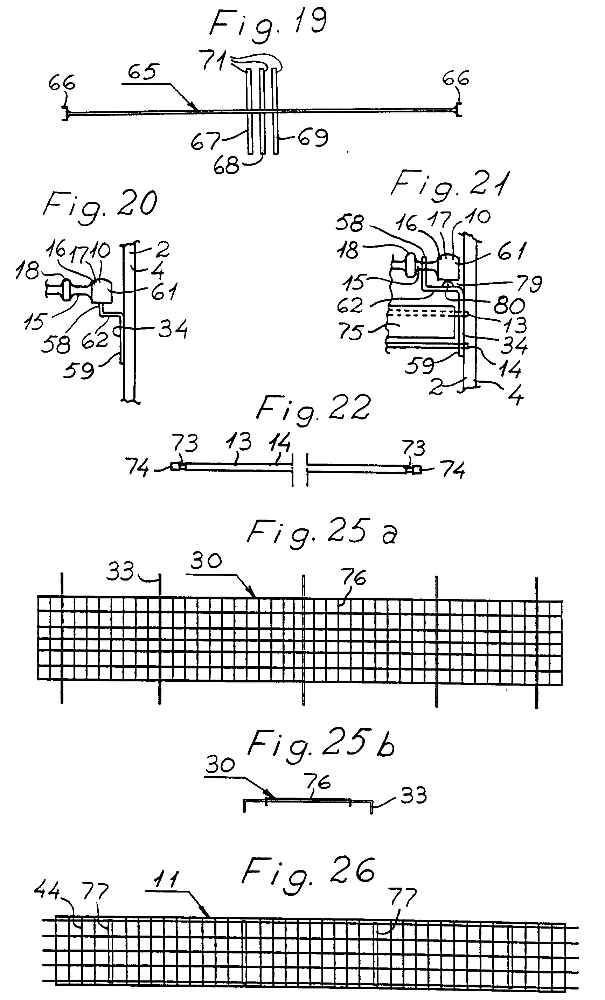

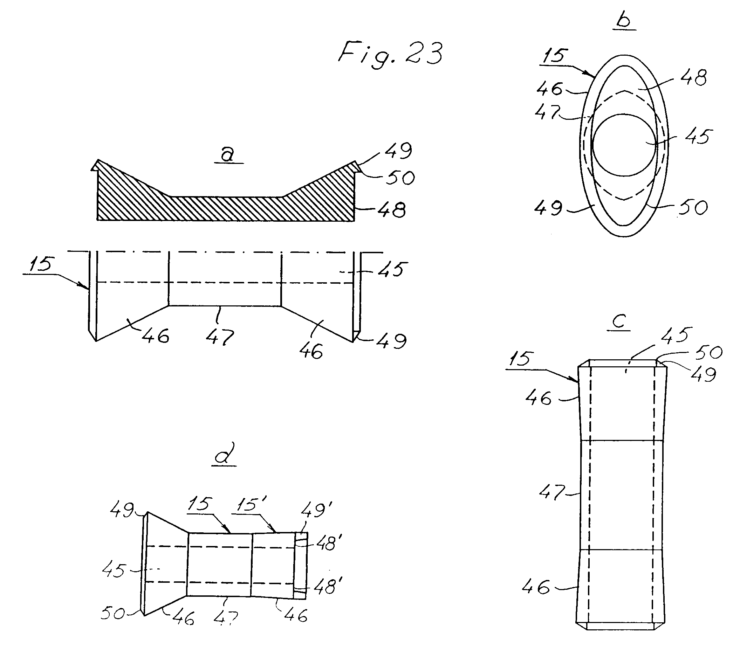

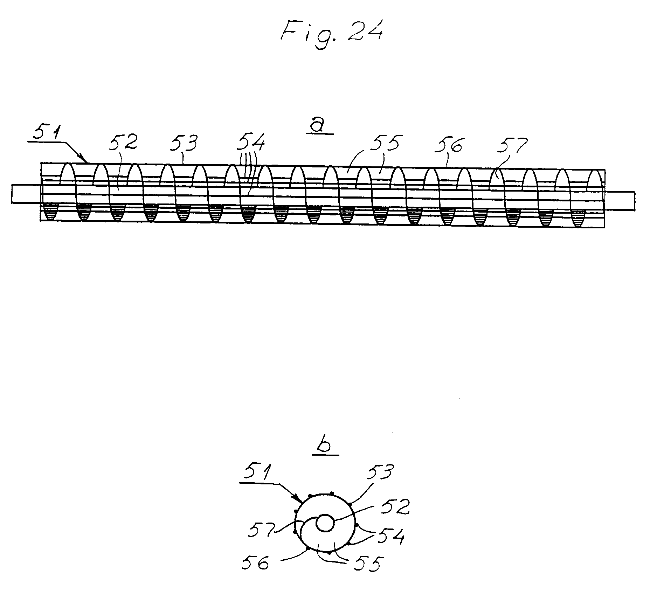

Further characteristics and advantages of the arrangement, in accordance with the invention, will in the following description of the arrangement be apparent by an emodiment, whereby a simultaneous reference will be made to the accompanying schematic drawings, of which Fig. 1 shows from one side an example of an arrangement in accordance with the invention according to one embodiment, Fig. 2 shows from another side a part of the arrangement in accordance with Fig. 1, Fig. 3 shows in perspective a three dimensional view of an embodiment of an element which is to form or be part of a stage, Figs 4 and 5 show from above and from one side another embodiment of an element, Figs 6 and 7 show from above and from one side yet another embodiment of an element, Figs 8 and 9 show from above and from one side a further embodiment of an element, Fig. 10 shows in a perspective view a part of a post with an example of a holding device, which can be included in the arrangement or its frame, Figs 11 and 12 show, to an enlarged scale, parts of the arrangement in Fig. 1, Fig. 13 shows a holding element from one side, Fig. 14 shows the holding element from Fig. 13 from another side, Fig. 15 shows in a perspective view another embodiment of a holding device, Fig. 16 shows in a cross-section part of an arrangement according to the invention in accordance with another embodiment with a load support device and includes another embodiment of the holding device, Figs 17 a and b show from above a part of the arrangement in Fig. 16 but without the element and, to enlarged scale, a part of the arrangement in Fig. 17 a, Figs 18 a-c show a load bearing device from one side, from above the load bearing device in Fig. 18 a, and from above an alternative design of a load bearing device with only one load bearing element, Fig. 19 shows from above, yet another embodiment of a load bearing device or the load bearing device which was shown in Fig. 16, Fig. 20 shows, from one side, a cross section through one part of an arrangement according to the invention with yet another embodiment of a holding device, Fig. 21 shows from one side a part of an arrangement according to the invention with a further embodiment of a holding device, Fig. 22 shows from one side an example of a bearing element, Figs 23 a-d show from one side and partly in section, from another side and in an end view, an embodiment of a spacer element, and from one side another embodiment of a spacer element, Figs 24 a and b show from one side and in an end view a cylinder, Figs 25 a and b show from above and from one side an alternative shape of an element or a part of an element and Fig. 26 shows from above yet another embodiment of an element or a part of an element.

Frame 2 comprises posts 4 and stiffening elements 5, which are intended to extend between, and be connected to, at least two posts 4 In accordance with the shown embodiment, the stiffening elements 5 are in the form of elements extending horizontally, for example sheets or sheet profiles, and can have bearing devices 25, such as by means of recesses arranged in stiffening elements 5, for holding feed or drinking water installations, such as feed troughs and pipes with drinking cups, or any other equipment in arrangement 1. The frame 2 or posts 4 thus support such installations and equipment, which in this way do not load the stages 3. Posts 4 in arrangement 1 should be arranged at a distance from one another, such as in accordance with the vertical supports shown in the embodiment. Stiffening elements 5 are arranged to stiffen frame 2. Stages 3, 3' are intended to be supported in arrangement 1 by frame 2 or posts 4 and along at least two opposing sides 31, 32 of the stages.

For example with four posts 4, one or more stiffening elements 5 and at least one stage 3, an arrangement 1 can be formed in accordance with the invention. Preferably two or more stages 3 are arranged above one another in frame 2. Thus, arrangement 1 can consist of only a simple frame 2 for supporting one tier 7 or 9 of stages 3. By using two further posts 4, a stage 3 can be extended, see Fig. 2 etc. One or more stages 3 can also be arranged in a second frame 2, which preferably is arranged at a distance from a first frame, see Fig. 1 etc., by which in accordance with an embodiment at least one stiffening element 5 with the one frame 2 can be arranged to a post 4, 28 in the other frame 2, as well as at least one stiffening element 5 in the second frame 2 can be linked to a post 4, 28 in the first frame 2, i.e. that both mentioned frames 2 are connected with each other to form a frame 2 to carry two tiers 7 and 9 or series of stages 3, for example as shown in accordance with the embodiment in Fig. 1. Further frames 2 can in this manner be arranged to the shown frame 2 and each individual frame 2 does not only need to be placed beside another but can also, or instead, be arranged for example at an angle or right angle to each other to form a combined frame 2. Frames 2 arranged beside one another are arranged at a suitable distance from one another so that a gap 60 is obtained between frames 2 to allow the movement of poultry between different stages 3, i.e. that the poultry can fly between tiers 7, 9 of stages 3.

With further reference to Figs 3-9, an example of an element 10 is shown, which can form a stage 3 or a part of a stage. As is shown in the figures, the elements 10 comprise beams 11, laths and/or similar, which are arranged at a distance from each other, i.e. with intervals 19, but are arranged to be held together by means of through beams 11, laths and/or similarly extending joining devices 12. Between beams 11, laths and/or similar, spacer element 15 can be arranged. In element 10 at least two outer beams 16 and one or more roosts 17 should be included plus, where appropriate, filling laths 18 which, in accordance with the embodiments shown, are located between outer beams 16 and a roost 17 or a net 44, grating or similar and, where appropriate, between roosts 17. In accordance with the examples shown in Fig. 3-5, element 10 consists of two outer beams 16 and three roosts 17 located at mutually equal distances from each other and outer beams 16, plus filling lathes 18 between outer beams 16 and adjacent located roosts 17, plus between roosts 17. The outer beams 16 are preferably also formed as roosts 17, 61, as is particularly evident from the embodiments in Figs 4-9. The outer beams 16, 61, roosts 17 and filling lathes 18 are preferably formed of wood or wood-based fibre material and the net 44 of, for example, wire or surface treated metal wire. The various parts 16, 61, 17, 18, and 44 in element 10 are held together by means of joining device 12 or, in accordance with the embodiments shown, by four rod-shaped assembly stays, which can consist of metal. The spacer elements 15 can be made of plastic material.

One or more such units or elements 10, which are self-supporting, can thus be arranged in frame 2 and form a plane or stage 3, 3' for the poultry to be in, see for example the bottom stage 3' in Fig. 1 and the second stage 3 in the tier 9. One stage 3 can be made of several elements 10 arranged following one another, such as shown in Fig. 2. It is also possible to arrange two or more elements 10, arranged after one another in arrangement 1 at various levels, to form a stage 3 in the form of steps.

Roosts 17, which become an integral part of the actual stage 3, but preferably also outer beams 16 or other beams 16, 61 formed as roosts 17 and filling laths 18 are rounded on one side or the side which will form a sitting surface for the poultry. Thus the rounding is suited to the poultry and their feet.

Arrangement 1 is of simple design and contains few parts since it really only comprises a frame 2 and elements 10, of which frame 2 comprises posts 4 and stiffening elements 5, i.e. that arrangement 1 can be produced with essentially only three different devices or elements. In accordance with an embodiment for arrangement 1, according to the invention, posts 4 are formed or equipped with holding devices 34, see Fig. 10. The holding device 34 shown is formed to support two elements 10 following one another and to project from posts 4 in two directions. In accordance with the embodiment holding devices 34 are arranged at each post 4 and on each level along the height of the posts where a stage 3 or element 10 will be connected. The holding devices 34 have, at a distance from the posts, a first engagement device 35. The end parts of both the rod-shaped joining devices 12 can be arranged to project a little beyond the outer beams 16 and to have engagement devices in the free end parts, for example threads, for a connecting device 41, for example a nut or similar, see Fig. 11. The two outermost located joining devices 12 in element 10 are arranged at a distance from the ends of the element. By letting the two mentioned outer joining devices 12 each engage or enter a holding device 34, or its engagement device 35, element 10 can be arranged in arrangement 1 or frame 2, by which element 10 with its outer beams 16 lies against a first side 37 of each holding device 34, while connecting device 41 connects with the joining devices 12 on a second side 38 of the holding devices 34, i.e. with holding devices 34 as an intermediate layer.

Accordingly stage 3 is arranged in frame 1 between posts 4 and is supported by frame 2, posts 4 or holding devices 34 of the mentioned posts. The holding devices 34 in the ends of arrangement 1, or if arrangement 1 has a length equivalent to only one element 10, the holding devices 34 have a shape which means that the holding devices 34 only projects from the post 4 in one direction, i.e. constitutes half a holding device 34 as shown in the example. The holding device 34 can also be designed to project from the post 4 in two or more different directions or, for example, at essentially a right angle between the shanks in the holding device, by which arrangement 1 is arranged so that it extends at an angle or on at least two legs.

The holding devices 34 can also have a second engagement device 36, for example in the form of a hole through the holding device. This engagement device 36 can, for example, be utilized when element 10 is provided with holder elements 20 for holding, for example, a first support element 13, by which the engagement device is arranged for the said, first support element 13 to pass through the holding device. In accordance with the embodiment for element 10 shown in Figs 1, 11 and 12, both outer beams 16 have a through hole 39 for the said first support element 13 to pass through element 10 or the two outer beams 16. The said first support element 13 can, like the previously mentioned joining device 12, be arranged to project a little beyond the outer beams 16 and in the free end parts have an engagement device formed, for example threads, for a connecting device 42, for example in the form of a nut. Holding device 34 can have further engagement devices 43, for example in the form of openings, for assembling or engagement of other arrangements, equipment etc., which will be included in arrangement 1 and which accordingly will be supported by frame 2 or posts 4. As can be seen in Fig. 3 where element 10 is fitted with holder elements 20, which are aranged to the element by mounting with the joining devices 12 and, in accordance with the embodiment, and also with the said first support element 13, which thereby is mounted with element 10.

The said holder element 20, which is closer shown in Figs 13 and 14, is formed as, or to have, a loop 21 or is formed with a loop-shaped part 21, whereby loop 21 or the loop-shaped part 21 in arrangement 1 is arranged to extend below element 10, beams 11 or outer beams 16 in element 10 and has a first connecting element 22 for connecting with joining device 12, a second connecting element 23 for passing through and/or joining with a said, first support element 13 or similar and, in accordance with the embodiment, an opening 24 or a through hole to supply a second support element 14, in accordance with the shown and described embodiment, to loop 21 or the loop-shaped part 21, which has a wall, leg 27 or similar with a recess 29. A such mentioned second support element 14 can in this way be projected through opening 24 in loop 21 or the loop-shaped part 21 and then, of its own weight, falls down and is held by loop 21 or the loop-shaped part 21 at the same time as it extends through the mentioned recess 29. Element 10 is, by means of the holder element 20, arranged in such a way that it can support other arrangements or other types of elements which are thus connected with element 10 via the holder element 20.

Holding device 34 can, in accordance with another embodiment, consist of an attachable support device fitted in the posts for the stages 3, between at least two adjacent posts 4 located on one or the same side of stage 3, whereby two holding devices 34 located on each side of a stage 3 act together to support the stage, similar to the previously described holding devices 34. The holding device 34 can be formed with a first part or flange 58 and a second part or flange 59, which are directed in opposite directions from a spacer part 62, see Figs 15 and 20, and consist of, for example, a sheet profile. The free edge 72 of the first flange 58 forms a supporting surface 63 for element 10 or its outer beam 16, 61 or the roost 17 located furthest out. The second flange 59 can have fastening means 64, such as through holes, for fastening in frame 2 or its posts 4 by means of bolts, screws or similar and, in similarity with holder element 20, connecting elements or openings or through holes 23, 24, for example, for first and second support elements 13 and 14.

Since the said supporting surface 63 is minimal or so narrow, the risk of pests gathering between element 10 and holding device 34 is minimal. Supporting surface 63 can be reduced further through a recess being made in the first flange 58. Furthermore, the element 10 lies freely on the said supporting surface 63 of the holding device 34 or first flange 58, which is thereby easy to remove for flushing and other cleaning.

An arrangement according to the invention can hold a lot of poultry and one element 10 can thus support a great number of poultry. In order to prevent deflection of a heavily loaded stage 3, load hearing devices 65 are arranged in accordance with an embodiment, see Figs 16, 17 a and b. In accordance with an embodiment, load bearing device 65 is arranged in the end parts of each element 10 and, in accordance with an advantageous embodiment, right in front of pairs of posts 4 or 26 and 28, as shown in Figs 16, 17 a and b. Load bearing device 65, which in accordance with the embodiment is arranged to rest on holding device 34, can be formed of band shaped elements, for example band iron, which in arrangement 1 is arranged on end, thereby high bending strength is obtained. For position fixing, load bearing devices 65 can have a fixing device 66 in the end parts, for example in the form of a U-shaped profile, fork or similar, which can engage against or around at least a part of a closely located post 4, which is a simple and sufficient fixing of load bearing device 65 and makes fixing device 66 and load bearing device 65 easy to remove. In this connection element 10 is arranged to have its end parts in connection with posts 4. Load bearing device 65 has one or more supporting devices 67, which are arranged to slip in under element 10, so that this can be supported or rested on supporting device 67 and extend on both sides of at least one beam 11 or similar, or a centre roost 17 in element 10, so that the element is held or fixed against displacement across arrangement 1 or frame 2. At the same time a fixing against displacement is obtained along arrangement 1 and frame 2.

In Figs 18 a-c and Fig. 19 examples are shown of load bearing device 65, by which supporting device 67 can be shaped as a U-shaped profile with a supporting part 68 and side supports 69, by which the supporting parts 68 can have an opening 70 to avoid the risk of collection of dirt and the pests. With an embodiment as shown in Fig. 19, load bearing device 65 consists of three projecting pins 71 or similar and with one pin as supporting part 68 and the two other pins, which are located somewhat higher than the supporting part, as side supports 69. With the latter variant of supporting device 67 which preferably has a circular cross-section, there is no risk of dirt or pests collecting.

Load bearing device 65 can in this manner be simply lifted out of arrangement 1 and is therefore easy to remove for cleaning, washing or similar. By means of load bearing devices 65 and by linking them to posts 4, the load is transferred from elements 10 or stages 3 directly to posts 4 and frame 2.

Holding device 34 can be formed so that it fixes element 10 sideways or across arrangement 1 or frame 2 and/or longitudinally. In this connection the said first flange 58 is arranged to extend from spacer portion 62 a little in the direction of a stage 3. Thus flange 58 can be fitted with recesses in which joining devices 12 or spacer elements 15 can rest, thus element 10 is fixed both laterally and longitudinally, see Fig. 21. Outer beams 16, 61 of element 10 are thus located on the other side of first flange 58 and rest on spacer portion 62. However, there is thus a risk of pests, such as mites collecting in the hiding-places, recesses or similar, which are formed between the spacer portion 62 and flange 58 of holding device 34 and element 10 or stage 3 or its outer beams 16, 61, i.e. between connecting surfaces between element 10 or stage 3 and holding device 34. In order to reduce or eliminate such risks, the first flange 58 of the holding device can be arranged at a certain distance from element 10 or its outer beam 16, 61 and the spacer portion 62 of holding device 34 is fitted with raising parts 80, projections or similar, against which element 10 or its outer beams 16, 61 rests. It is also thinkable with such an embodiment of the holding device 34 to exclude the first flange 58, but then a fixing device is required, for example in the form of load bearing devices 65, to secure the fixing of element 10 laterally. However, it should be pointed out in this connection, that stage 3 remains in arrangement 1 or on holding devices 34 in a transverse direction by the end parts of each element 10 in stage 3 being located or intended to be located inside and right on front of a post 4, which thus prevents stage 3 or individual elements from being displaced in the transverse direction of arrangement 1. However, element 10 can, in accordance with an embodiment, be made somewhat shorter to avoid forming hiding-places or similar where the ends meet one another, i.e. that an adequate distance is obtained between connecting elements 10 and thereby hiding-places or similar are eliminated in which dirt and pests can easily and quickly collect. Thus the fixing of element 10 laterally by posts 4 is reduced or removed, which is why load bearing devices 65 should be arranged to secure the lateral fixing but also to fix element 10 longitudinally. With the embodiment whereby element 10 rests on the free edge 72 of the first flange 58, there are no hiding places or similar, which is why the risk of dirt and pests collecting is eliminated, but load bearing devices 65 for fixing the element laterally and longitudinally should be used. In addition, element 10 or stage 3 and load bearing device 65 are easily removable by hand for cleaning, washing etc., while element 10 or stage 3 obtain a support and, at the same time, are held against displacement laterally and longitudinally in arrangement 1. The holding devices 34 provide through fixing in the posts and, by extending between the posts, arrangement 1 or frame 2 stability or increased stability longitudinally. In both ends of a stage 3, load bearing devices 65 with supporting devices 67 are arranged in adjacent posts 4, such as is shown in Fig. 18 c, which project from one side of load bearing device 65. Holding device 34 can also be utilized as a support and suspension device for other equipment and arrangements in arrangement 1, such as support elements 13, 14 for a conveyor 75 or a conveying equipment for collecting manure and other waste from the stages 3, see also Fig. 21. By means of the holding device 34 according to the invention, except with the embodiment shown in Figs 1 and 2, another advantage is gained, namely that such a conveyor 75 can be made wider and overlap the part of stage 3 in the lateral direction which is pervious to manure and other waste, i.e. that all waste dropping from stage 3 can be collected by conveyor 75, which with its longitudinal edges slides under the holding devices 34 or their spacer portion 62. For the arrangement of such exemplified support elements 13, 14 , connecting elements 23, 24 can be arranged in the second flange 59 of the holding devices 34 and, as shown in the embodiment in Fig. 15, consist of holes through the flange, for example in the form of keyhole shaped holes.

The support elements 13, 14 can in their simplest form be made of rods with, in accordance with previously described embodiment, simply formed anchoring elements in the form of recesses, notches 73, grooves or similar in the end parts 74 of the support elements, see Fig. 22. Thus these can be easily assembled and removed in arrangement 1 by slipping in the end parts through the enlarged part in the connecting elements 23, 24 and leading down the support element into the more congested part of the fixing device so that the material in the holding device 34 which limits the connecting device's more congested part from penetrating in the notches 73 in the support elements 13, 14. By arranging support elements 13 and/or 14 between the holding devices 34 a stabilization of arrangement 1 is obtained and also of the holding devices 34 and their said second flange 59 in themselves, as the support elements 13, 14 will connect the holding devices 34 and the flanges 59 and stabilize one another.

In Figs 23 a-d, an example of a spacer element 15 is shown, which can consist of a tube or sleeve-shaped element. In accordance with an embodiment, spacer element 15 has an oval tubular cross-section and is arranged to be able to enter the joining device 12 by means of an engagement means 45, for example in the form of a through hole, by which the spacer element is arranged with a narrow side upwards in the element 10 in order to avoid manure collecting on the spacer element, i.e. in such a position the spacer element 15 forms a control device with control surfaces for leading the manure to the area below the element 10. In accordance with an embodiment, distance element 15 has, from a centre part 47, outwards tapering end portions 46 for connecting the touching parts 48 or surfaces, or enlarged such, for supporting, lying against and stabilizing beams 11, laths and/or similar in element 10. The end edges are formed with projecting flanges 49 or similar, which are intended to be introduced into adjacent outer beams 16, 61, roosts 17 and filling laths 18, so that the touching surfaces 48 of the spacer elements lie against the outer beams, roosts and filling laths or surround the end of a tube. The flanges 49 are preferably taper-shaped so that the flanges end in a point 50 to facilitate entering of the flanges 49 with an edge 50, for example such as outwardly narrowing flanges, which are designed to enter and be introduced into adjacent outer beams 16, 61, roosts 17 and filling laths 18. By means of this construction the spacer elements 15 are sealed against the outer beams, roosts and filling laths, by which spaces, recesses, openings or similar are avoided in the element 10 and thereby the collection of manure and dirt in element 10.

As can be seen in the embodiment in Figs 1 and 21, first and second support elements 13 and 14 are arranged under certain stages 3 for a conveyor or conveyor equipment for collecting manure and other waste from the stages, by which the support element 14 can be arranged to support a returning conveyor or conveying equipment. Beams 11, 16, 61, roosts 17 and filling laths 18 in element 10 are intended to be arranged at a sufficient distance from one another so that manure and other waste can easily fall down on an underlying manure removal mat. In accordance with an example the manure removal mat runs as an endless conveyor around rollers. The rollers, or at least one roller 51, see Figs 24 a and b, can have a special shape.

In case of an endless conveyor, dirt, waste and similar fall down onto the return conveyor, i.e. between the conveyor loops, accompanies the conveyor and is collected at a roller, which can cause a stop in operations, in addition to inconvenience due to the collection of dirt and similar. For this reason, it has been proposed that an inclined sheet should be arranged to prevent dirt etc. from entering the space between the conveyors. However, it has been shown that such an arrangement does not meet requirements. In plants where an arrangement, according to the invention, is to be used, droppings, dust, feathers, down, spilled feed and other waste fall down and get caught in the space between the conveyors and such waste is difficult to remove and would inevitably lead to the said inconveniences. In order to avoid such inconveniences, one embodiment of the arrangement according to the invention, has a roller 51 shaped so that cleaning and removal of such dirt collected and accumulated between the conveyors is carried out automatically. The previously mentioned inclined plate used for the purpose can thereby be dispensed with. Thus roller 51 is supplied with a core 52, bobbin or similar and a casing 53. The casing 53 is formed of wire or belt-shaped materials 54 spaced at a distance from one another so that openings 55 are obtained in the casing 53 to a spiral 57 or a screw arranged inside the casing surface 56 of the roller, which cleans the conveyor and removes the dirt from the conveyor for collection and removal.

According to an embodiment of arrangement 1, according to the invention, at least two frames 2 are used, which are intended to be connected to one another. With two connected frames 2, posts 4, 26 along the first side 31 or the outer side of the stages 3 are arranged to rest against the foundation, see Fig. 1, while the bottom end 8 or the end part of the posts 4, 28 along the second side 32 or inner side of stage 3 are arrange at a distance from the foundation. Only the outer posts 26 of the frame 2 are thus resting with their ends 6 against the foundation. Thus an improved space 40 below arrangement 1 is created, for example for a manure removal arrangement.

In order to cover space 40, a smaller element 30 is arranged in arrangement 1, frame 2 or between inner posts 28, see Figs 1, 12, 25, which together with element 10 form a bottom and space 40 below arrangement 1 covering stage 3'. In order to obtain simple access to space 40, for example for maintenance or repair of a manure removal arrangement, the smaller element 30 in arrangement 1 or frame 2 is held by a special connecting means 33 so that element 30 is easy to remove from its intended position in arrangement 1 or frame 2. Element 30 can, for example, be composed of a net 76, grating or similar, see Figs 25 a and b.

In Fig. 26 a beam 11 or similar is shown in the form of a net 44 or similar, which can be included in a stage 3 or an element 10. The net 44 has tubings 77, through which a joining device 12 can be brought, whereby spacer elements 15', see Fig. 23 d, which are formed with one end part 46 in accordance with the previously described spacer elements 15 for penetrating in an adjacent beam 11 or similar, and a second end part 46 with a flange 49', which surrounds the end of the said tubing 77, which connects with the touching surface 48'.

The stages 3 form a level surface of such material and design, that the poultry can use the whole surface, can move comfortably over the whole stages and obtain a suitable surface to roost and reside in for example. On certain stages 3 also for taking food and water and on some stages 3 for perhaps only resting. By means of the plane stages 3 the movement of poultry around and to other stages is not prevented. What is essential in this connection is i.a. that the roosts 17, 61 become an integral part of the residing surface or stages 3, and on the same level as the stage 3, whereby, since they are integrated, there is space for arranging more or a sufficient number of roots 17. By forming outer beams 16 in the shape of roosts 17, 61 there is the further benefit of these being reduced in size and extent in relation to stages 3 or space lying below and do not prevent the movement of poultry between different stages 3, to nests etc, in addition to there being two further roosts 17, 61 on each stage 3 or element 10.

When using holding devices 34 with the narrow supporting surface 63 in the free edge 72 of the first flange 58, in addition to hiding places 79 for dirt and pests collect being eliminated and that stages 3 or elements 10 are easy to remove from arrangement 1 for cleaning, washing etc. and easily replaceable and without having to dismantle anything else in the arrangement, furthermore the stages 3 are simply removable for replacement, changes in arrangement 1 or in element 10 of beams 11 etc., plus that conveyors 75 arranged below the stages are more easily accessible for cleaning, adjustment repair etc. Furthermore arrangement 1 is generally more easy to handle, simpler to assemble, dismantle and change, more easily accessible for maintaining the highly set demands on hygiene in the arrangement and easier to handle when carrying out cleaning, and so cleaning and other maintenance can be carried out more often, checking to prevent any pests collecting can be carried out in an easier way.

Without exceeding the scope of the concept of the invention, modifications of the arrangement should be possible. Thus, more frames can be assembled and each frame can have more or less stages or elements and arranged on other levels above the foundation than what is shown in the embodiments. However, the stages in adjacent frames should be located at reciprocally different levels above the foundation to allow the poultry to move between stages in the first frame and to stages in the second frame so that the poultry can move upwards and downwards in the arrangement. Light crossbars can be used extensively or virtually throughout the arrangement. The arrangement according to the invention is thus not restricted to what has been shown and described in the embodiments but solely by the claims hereinafter.

## Claims

1. An arrangement in such installations for holding poultry where poultry are able to be on stages above a foundation and comprising beams (11), laths or similar which, in the arrangement (1), are intended to form at least one stage (3) on which poultry can be, a frame (2) comprising posts (4), which, in the arrangement (1), are intended to be arranged at a distance from one another and in applicable cases means for collection of manure and other waste from at least one stage (3), that said beams (11), laths or similar are to be united at relative distances from one another to form a unit in form of an element (10), wherein the arrangement (1) comprises two or more such units which, in the arrangement (1), are arranged in the frame (2) one after the other and/or above one another, that each unit or element (10) is supported by the frame (2) along at least two opposite sides (31, 32) of the unit or element (10), characterized in that at least two adjacent frames (2) with units or elements (10) are comprised in the arrangement (1) and placed beside or on the side of one another and at a distance from one another, whereby at least one element (10) in one frame (2) is arranged at a certain height above the foundation, while at least one or preferably two elements (10) in the second frame (2) is/are arranged at another height above the foundation so that at least one element (10) in one frame (2) is at a different height above the foundation than the element (10) or elements in an adjacent frame (2).

2. An arrangement in accordance with claim 1, characterized in that two frames (2) are arranged at a distance from each other forming an interspace (60) between the frames (2) which can be used by the poultry to allow movement between different stages (3) in the arrangement (1).

3. An arrangement in accordance with claim 1 or 2, characterized in that each frame (2) is arranged with at least one stiffening element (5), which in the one or a first frame (2) is connected with a post (4, 28) in the other or a second frame (2), as well as at least one stiffening element (5) in the other or second frame (2) can be connected with a post (4, 28) in the said one or first frame (2).

4. An arrangement in accordance with claim 1, 2 or 3, characterized in that the said beams (11), laths and/or similar form or comprise roosts (17) which thus become an integral part of the element (10), which at least is to form a part of a stage (3) and form a plane for poultry to stay.

5. An arrangement in accordance with any of the claims 1 - 4, characterized in that the beams (11), laths and/or similar, which are an integral part of an element (10), are intended to form at least two outer beams (16, 61), one or more roosts (17) and filling laths (18) and/or nets (44), gratings or similar, which are to be located between the outer beams (16, 61) and a roost (17) or between a filling lath (18) and a roost (17) and in applicable cases between roosts (17), whereby each of the said outer beams (16, 61) can form a roost (17).

6. An arrangement in accordance with any of the claims 1 - 5, characterized in that the outer beams (16, 61), roosts (17) and filling laths (18) are formed of wood or woodbased fibre material and are rounded on one side or the side which will form a sitting surface for the poultry.

7. An arrangement in accordance with any of the claims 1 - 6, characterized in that the beams (11), laths and/or similar, which are an integral part of an element (10), are arranged to be held together by joining devices (12) extending through the beams (11), laths and/or similar.

8. An arrangement in accordance with any of the claims 1 - 7, characterized in that said units or elements (10) are self-supporting.

9. An arrangement in accordance with claim 7, characterized in that at least two such joining devices (12) also can form attachment means for the arrangement of the element (10) in the arrangement (1) or frame (2).

10. An arrangement in accordance with any of the preceding claims, characterized in that the arrangement (1) comprises spacer elements (15) which, in the arrangement (1) or said element (10), are to be arranged between said beams (11), laths and/or similar and are shaped with touching surfaces (48) to touch against the beams (11), laths and/or similar and a flange (49) or the like projecting around the touching surfaces (48).

11. An arrangement in accordance with claim, 10, characterized in that in the arrangement (1) or said element (10) said flange (49) is introduced into adjacent outer beams (16, 61), roosts (17) and filling laths (18).

12. An arrangement in accordance with any of the preceding claims, characterized in that each element (10) in the arrangement (1) is supported by load bearing devices (65) resting on holding devices (34) and arranged in front of pairs of posts (4, 26, 28).

13. An arrangement in accordance with claim 12, characterized in that said load bearing devices (65) have a fixing device (66) in the end parts, for example in the form of an U-shaped profile or similar to engage at least a part of a closely located post (4), and one or more supporting devices (67) which are shaped as an U-shaped profile with a supporting part (68) and side supports (69) or consist of three projecting pins (71) or similar and with one pin (68) as supporting part and two pins (69), which are located somewhat higher than the supporting part, as side supports.

14. An arrangement in accordance with claim 1, 7, 9 or 12, characterized in that the posts (4) are formed or can be provided with holding devices (34) for the connection of at least one element (10) with a post (4) or arranged in the arrangement (1) for the supporting of the element (10) by the frame (2), whereby the holding devices (34) consist of plates, sheet profiles or similar elements, anchored or anchorable in the posts (4).

15. An arrangement in accordance with claim 1 or 14, characterized in that holder devices (34) project from posts (4), between posts (4) arranged after one another, extending profiles or in applicable cases intended to project from posts (4) in at least two directions.

16. An arrangement in accordance with claim 1, 7, 9, 14 or 15, characterized in that the posts (4) are formed or can be provided with holding devices (34), which have two shanks (58, 59) extending in opposite directions from a body (62) in the form of a profile, whereby the said element (10) is arranged to rest on the free edge (72) of one shank (58), while the other shank (59) is linked to at least two adjacent posts (4).

17. An arrangement in accordance with claim, 16, characterized in that the said element (10) lies freely on the said free edge (72) of the holding devices (34) and is by that fact easy to remove from the arrangement (1).

18. An arrangement in accordance with claim 1, 7, 9, 14, 15 or 16, characterized in that the posts (4) are formed or can be provided with holding devices (34), showing connecting elements (23, 24), for example in the form of keyhole-shaped engagement devices, for first and second support elements (13, 14) or a second connecting elements (23, 36) for the engagement or carrying through a first support element (13) for, for example, a conveyor or conveying equipment, which can be arranged in the arrangement (1) below a stage (3) for collection and transport of manure and other waste from the stage.

19. An arrangement in accordance with claim 1, characterized in that joining devices (12) for the beams (11), laths and/or similar being arranged to support holding elements (20) for at least a first but preferably also for a second support element (13; 14) or that an element (10) is arranged to support at least a first but preferably also at least a second support element (13, 14), which in the arrangement (1) are connected with the element (10) via holding elements (20), which are arranged or can be arranged in the said joining device (12).

20. An arrangement in accordance with claim 1, 18 or 19, characterized in that under at least one stage (3) or one element (10) there is arranged in the arrangement (1) a conveyor or conveying equipment for collecting manure or other waste, whereby the conveyor or conveying equipment is arranged to go around rollers of which at least one roller (51) is formed with a casing (53), which is formed with openings (55) to a spiral (57) or screw arranged within the cylinder surface or roller (51).

21. An arrangement in accordance with claim 1, characterized in that at least two frames (2) with stages (3) or elements (10) or units of elements (10) should be, used in the arrangement (1) and which frames (2) are intended to be connected with each other, whereby in two connected frames, posts (2, 26) along one side (31) or outer side of the stage (3) are arranged to support against the foundation, while the lower end or end part (8) of the posts (4, 28) along the other side (32) or an inner side of the stage (3) is arranged at a distance from the foundation.

## Patentansprüche

1. Anordnung in Anlagen zum Halten von Geflügel, in welchen sich das Geflügel auf Böden oberhalb eines Fundaments aufhalten kann, mit Trägern (11), Gitterlatten oder dergleichen, die in der Anordnung (1) dazu bestimmt sind, mindestens einen Boden (3) zu bilden, auf dem das Geflügel sein kann, einem Rahmen (2) mit Pfosten (4), die in der Anordnung (1) dazu dienen, beabstandet voneinander angeordnet zu werden, sowie gegebenenfalls Mitteln zum Sammeln von Dünger und anderem Abfall von mindestens einem Boden (3), wobei Träger (11), Gitterlatten oder dergleichen in relativen Abständen voneinander vereint werden, um eine Einheit in Form eines Elements (10) zu bilden, wobei die Anordnung (1) zwei oder mehrere solcher Einheiten aufweist, die in der Anordnung (1) in dem Rahmen (2) hintereinander und/oder übereinander angeordnet sind, so daß jede Einheit oder jedes Element (10) durch den Rahmen (2) entlang mindestens zweier entgegengesetzter Seiten (31, 32) der Einheit oder des Elements (10) getragen wird, dadurch gekennzeichnet, daR mindestens zwei benachbarte Rahmen (2) mit Einheiten oder Elementen (10) in der Anordnung (1) enthalten sind und nebeneinander oder seitlich zueinander im Abstand voneinander angeordnet sind, wobei mindestens ein Element (10) in einem Rahmen (2) in einer gewissen Höhe oberhalb des Fundaments angeordnet ist, während mindestens ein oder vorzugsweise zwei Elemente (10) in dem zweiten Rahmen (2) auf einer anderen Höhe oberhalb des Fundaments angeordnet ist/sind, so daß mindestens ein Element (10) in einem Rahmen (2) auf einer anderen Höhe oberhalb des Fundaments als das Element (10) oder die Elemente in einem benachbarten Rahmen (2) ist.

2. Anordnung nach Anspruch 1, dadurch gekennzeichnet, daß zwei Rahmen (2) entfernt voneinander und unter Bildung eines Zwischenraums (60) zwischen den Rahmen (2) angeordnet sind, der von dem Geflügel genutzt werden kann, um sich zwischen unterschiedlichen Böden (3) in der Anordnung (1) zu bewegen.

3. Anordnung nach Anspruch 1 oder 2, dadurch gekennzeichnet, daß jeder Rahmen (2) mit mindestens einem Versteifungselement (5) angeordnet ist, das in dem einen oder einem ersten Rahmen (2) mit einem Pfosten (4, 28) in dem anderen oder einem zweiten Rahmen (2) verbunden ist, wobei auch mindestens ein Versteifungselement (5) in dem anderen oder zweiten Rahmen (2) mit einem Pfosten (4, 28) in dem einen oder ersten Rahmen (2) verbunden werden kann.

4. Anordnung nach Anspruch 1, 2 oder 3, dadurch gekennzeichnet, daß die Träger (11), Gitterlatten und/oder dergleichen Hühnerstangen (17) bilden oder aufweisen, die somit zu einem festen Bestandteil des Elements (10) werden, das zumindest einen Teil eines Bodens (3) bilden soll und eine Ebene bilden soll, auf der das Geflügel verweilen kann.

5. Anordnung nach einem der Ansprüche 1 bis 4, dadurch gekennzeichnet, daß die Träger (11), Gitterlatten und/oder dergleichen, die ein fester Bestandteil eines Elements (10) sind, dazu dienen, mindestens zwei äußere Träger (16, 61), eine oder mehrere Hühnerstangen (17) und ausfüllende Gitterlatten (18) und/oder Netzwerke (44), Gitter oder dergleichen zu bilden, die zwischen den äußeren Trägern (16, 61) und einer Hühnerstange (17) oder zwischen ausfüllenden Gitterlatten (18) und einer Hühnerstange (17) und in den betreffenden Fällen zwischen den Hühnerstangen (17) anzuordnen sind, wobei jeder der äußeren Träger (16, 61) eine Hühnerstange (17) bilden kann.

6. Anordnung nach einem der Ansprüche 1 bis 5, dadurch gekennzeichnet, daß die äußeren Träger (16, 61), Hühnerstangen (17) und ausfüllenden Gitterlatten (18) aus Holz oder einem Fasermaterial auf Holzbasis bestehen und auf einer Seite oder der Seite, die eine Sitzfläche für das Geflügel bildet, abgerundet sind.

7. Anordnung nach einem der Ansprüche 1 bis 6, dadurch gekennzeichnet, daß die Träger (11), Gitterlatten und/oder dergleichen, die ein fester Bestandteil eines Elements (10) sind, so angeordnet sind, daß sie durch Verbindungsvorrichtungen (12) zusammengehalten werden, die sich durch die Träger (11), Gitterlatten und/oder dergleichen hindurch erstrecken.

8. Anordnung nach einem der Ansprüche 1 bis 7, dadurch gekennzeichnet, daß die Einheiten oder Elemente (10) selbsttragend sind.

9. Anordnung nach Anspruch 7, dadurch gekennzeichnet, daß mindestens zwei solcher Verbindungsvorrichtungen (12) auch Befestigungsmittel für die Anordnung des Elements (10) in der Anordnung (1) oder dem Rahmen (2) bilden können.

10. Anordnung nach einem der vorhergehenden Ansprüche, dadurch gekennzeichnet, daß die Anordnung (1) Abstandselemente (15) aufweist, die in der Anordnung (1) oder dem Element (10) zwischen den Trägern (11), den Gitterlatten und/oder dergleichen anzuordnen sind und mit Berührflächen (48) ausgebildet sind, um gegen die Träger (11), Gitterlatten und/oder dergleichen zu stoßen, und wobei ein Flansch (49) oder dergleichen um die Berührflächen (48) herumragt.

11. Anordnung nach Anspruch 10, dadurch gekennzeichnet, daß in der Anordnung (1) oder dem Element (10) der Flansch (49) in benachbarte äußere Träger (16, 61), Hühnerstangen (17) und ausfüllende Gitterlatten (18) eingeführt ist.

12. Anordnung nach einem der vorhergehenden Ansprüche, dadurch gekennzeichnet, daß jedes Element (10) in der Anordnung (1) durch lasttragende Vorrichtungen (65) gehalten wird, die auf Haltevorrichtungen (34) aufliegen und vor Pfostenpaaren (4, 26, 28) angeordnet sind.

13. Anordnung nach Anspruch 12, dadurch gekennzeichnet, daß die lasttragenden Vorrichtungen (65) eine Feststeilvorrichtung (66) in den Endteilen haben, z.B. in Form eines U-förmigen Profils oder dergleichen, um mit mindestens einem Teil eines nahe angeordneten Pfostens (4) in Eingriff zu gelangen, und eine oder mehrere Stützvorrichtungen (67) haben, die als U-förmiges Profil mit einem tragenden Teil (68) und Seitenhaltern (69) geformt sind oder aus drei ausladenden Zapfen (71) oder dergleichen bestehen, und zwar mit einem Zapfen (68) als tragender Teil und zwei Zapfen (69), die etwas höher als der tragende Teil angeordnet sind, als Seitenauflagen.

14. Anordnung nach Anspruch 1, 7, 9 oder 12, dadurch gekennzeichnet, daß für die Verbindung mindestens eines Elements (10) mit einem Pfosten (4) die Pfosten (4) mit Haltevorrichtungen (34) ausgebildet sind oder mit solchen ausgestattet werden können, oder in der Anordnung (1) zum Abstützen des Elements (10) durch den Rahmen (2) angeordnet sind, wobei die Haltevorrichtungen (34) aus Platten, Blechprofilen oder ähnlichen Elementen bestehen, die in den Pfosten (4) verankert oder verankerbar sind.

15. Anordnung nach Anspruch 1 oder 14, dadurch gekennzeichnet, daß Haltevorrichtungen (34) aus Pfosten (4), zwischen hintereinander angeordneten Pfosten (4), mit Ausdehnungsprofilen hervorstehen oder in den betreffenden Fällen aus Pfosten (4) in mindestens zwei Richtungen herausstehen sollen.

16. Anordnung nach Anspruch 1, 7, 9, 14 oder 15, dadurch gekennzeichnet, daß die Pfosten (4) mit Haltevorrichtungen (34) ausgebildet sind oder mit solchen ausgestattet werden können, die zwei sich in entgegengesetzte Richtungen von einem Körper (62) aus erstreckende Schäfte (58, 59) in Form eines Profils haben, wobei das Element (10) so angeordnet ist, daß es auf der freien Kante (72) eines Schaftes (58) aufliegt, während der andere Schaft (59) mit mindestens zwei benachbarten Pfosten (4) verbunden ist.

17. Anordnung nach Anspruch 16, dadurch gekennzeichnet, daß das Element (10) frei auf der freien Kante (72) der Haltevorrichtung (34) aufliegt und dadurch von der Anordnung (1) leicht entfernt werden kann.

18. Anordnung nach Anspruch 1, 7, 9, 14, 15 oder 16, dadurch gekennzeichnet, daß die Pfosten (4) mit Haltevorrichtungen (34) ausgebildet sind oder mit ihnen ausgestattet werden können und Verbindungselemente (23, 24), z.B. in Form schlüssellochförmiger Eingriffsvorrichtungen, aufweisen für erste und zweite Stützelemente (13, 14) oder ein zweites Verbindungselement (23, 36) für den Eingriff oder die Durchführung durch ein erstes Stützelement (13) z.B. für einen Förderer oder eine Fördereinrichtung, der bzw. die in der Anordnung (1) unterhalb eines Bodens (3) zum Einsammeln und Befördern von Dünger oder anderem Abfall von dem Boden angeordnet werden kann.

19. Anordnung nach Anspruch 1, dadurch gekennzeichnet, daß Verbindungsvorrichtungen (12) für die Träger (11), Gitterlatten und/oder dergleichen angeordnet sind, um Halteelemente (20) für mindestens ein erstes, jedoch vorzugsweise auch für ein zweites Stützelement (13, 14) abzustützen, oder daß ein Element (10) angeordnet ist, um mindestens ein erstes, jedoch vorzugsweise auch mindestens ein zweites Stützelement (13, 14) abzustützen, die in der Anordnung (1) mit dem Element (10) über Halteelemente (20) verbunden sind, die in der Verbindungsvorrichtung (12) angeordnet sind oder in ihr angeordnet werden können.

20. Anordnung nach Anspruch 1, 18 oder 19, dadurch gekennzeichnet, daß unter mindestens einem Boden (3) und einem Element (10) in der Anordnung (1) ein Förderer oder eine Fördereinrichtung zum Einsammeln von Dünger oder anderem Abfall angeordnet ist, wobei der Förderer oder die Fördereinrichtung so angeordnet ist, daß er bzw. sie um Rollen herum verläuft, von denen mindestens eine Rolle (51) mit einem Gehäuse (53) gebildet ist, das mit Öffnungen (55) an einer Spirale (57) oder Schraube ausgebildet ist, die innerhalb der Zylinderfläche oder der Rolle (51) angeordnet ist.

21. Anordnung nach Anspruch 1, dadurch gekennzeichnet, daß mindestens zwei Rahmen (2) mit Böden (3) oder Elementen (10) oder Einheiten aus Elementen (10) in der Anordnung (1) verwendet werden sollten, wobei die Rahmen (2) dazu dienen, miteinander verbunden zu werden, wobei in zwei verbundenen Rahmen entlang einer Seite (31) oder äußeren Seite des Bodens (3) Pfosten (2, 26) angeordnet sind, um eine Abstützung gegen das Fundament zu bewirken, während das untere Ende oder der Endabschnitt (8) der Pfosten (4, 28) entlang der anderen Seite (32) oder einer inneren Seite des Bodens (3) von dem Fundament entfernt angeordnet ist.

## Revendications

1. Arrangement dans des installations pour détenir de la poulaille, dans lesquelles la poulaille peut être sur des planchers au-dessus d'un fondement, comprenant des poutres (11), des lattages ou similaire qui, dans ledit arrangement (1), sont destinés à former au moins un plancher (3) sur lequel la poulaille peut rester, un cadre (2) comprenant des montants (4) qui, dans ledit arrangement (1), sont destinés à être arrangés à l'écart l'un de l'autre, et, le cas échéant, des moyens pour la collection de fumier et d'autres déchets d'au moins un plancher (3), de sorte que lesdites poutres (11), lesdits lattages ou similaire soient unis à des écarts relatifs l'un de l'autre pour ainsi former une unité en forme d'un élément (10), ledit arrangement (1) comprenant deux ou plusieurs telles unités, lesquelles, dans ledit arrangement (1), sont arrangées dans ledit cadre (2) l'une après l'autre et/ou l'une au-dessus de l'autre, que chaque unité ou élément (10) est supporté par ledit cadre (2) le long d'au moins deux côtés opposés (31, 32) de ladite unité ou dudit élément (10), caractérisé en ce qu'au moins deux cadres avoisinants (2) avec des unités ou éléments (10) sont compris dans ledit arrangement (1) et placés à côté ou du côté l'un de l'autre et à l'écart l'un de l'autre, au moins un élément (10) dans un cadre (2) étant arrangé à une certaine hauteur au-dessus dudit fondement, tandis qu'au moins un ou de préférence deux éléments (10) dans ledit second cadre (2) est/sont arrangé/s à une autre hauteur au-dessus du fondement de sorte qu'au moins un élément (10) dans un cadre (2) soit à une hauteur au-dessus dudit fondement, différente dudit élément (10) ou desdits éléments dans un cadre avoisinant (2).

2. Arrangement selon la revendication 1, caractérisé en ce que deux cadres (2) sont arrangés à l'écart l'un de l'autre formant un espacement (60) entre lesdits cadres (2), et susceptibles d'être utilisés par la poulaille pour permettre son déplacement entre différents planchers (3) dans ledit arrangement (1).

3. Arrangement selon la revendication 1 ou 2, caractérisé en ce que chaque cadre (2) est arrangé avec au moins un élément de raidissement (5) qui, dans ledit un ou un premier cadre (2), est relié avec un montant (4, 28) dans ledit autre ou un second cadre (2), et qu'également au moins un élément de raidissement (5) dans ledit autre ou second cadre (2) est susceptible d'être relié à un montant (4, 28) dans ledit un ou premier cadre (2).

4. Arrangement selon la revendication 1, 2 ou 3, caractérisé en ce que lesdites poutres (11), lesdits lattages et/ou similaire forment ou comprennent des perchoirs (17) qui, de ce fait, deviennent une partie intégrante dudit élément (10) qui doit au moins former une partie d'un plancher (3) et former un plan sur lequel la poulaille peut rester.

5. Arrangement selon l'une quelconque des revendications 1 à 4, caractérisé en ce que lesdites poutres (11), lesdits lattages et/ou similaire, qui sont une partie intégrante d'un élément (10), sont destinés à former au moins deux poutres extérieures (16, 61), un ou plusieurs perchoirs (17) et des lattages de remplissement (18) et/ou des réseaux (44), des grillages ou similaire, qui doivent être positionnés entre lesdites poutres extérieures (16, 61) et un perchoir (17) ou entre un lattage de remplissement (18) et un perchoir (17) et, dans des cas d'intérêts, entre les perchoirs (17), chacune desdites poutres extérieures (16, 61) étant susceptible de former un perchoir (17).

6. Arrangement selon l'une quelconque des revendications 1 à 5, caractérisé en ce que lesdites poutres extérieures (16, 61), lesdits perchoirs (17) et lesdits lattages de remplissement (18) sont formés en bois ou en matériau de fibre à base de bois et sont arrondis d'un côté ou du côté qui va former une surface d'assise pour la poulaille.

7. Arrangement selon l'une quelconque des revendications 1 à 6, caractérisé en ce que lesdites poutres (11), lesdits lattages et/ou similaire, qui sont une partie intégrante d'un élément (10), sont arrangés afin d'être maintenus ensembles par des dispositifs de raccord (12) s'étendant à travers lesdites poutres (11), lesdits lattages et/ou similaire.

8. Arrangement selon l'une quelconque des revendications 1 à 7, caractérisé en ce que lesdites unités ou lesdits éléments (10) sont autoporteurs.

9. Arrangement selon la revendication 7, caractérisé en ce qu'au moins deux tels dispositifs de raccord (12) peuvent aussi former un moyen d'attachement pour l'arrangement dudit élément (10) dans ledit arrangement (1) ou cadre (2).

10. Arrangement selon l'une quelconque des revendications précédentes, caractérisé en ce que ledit arrangement (1) comprend des éléments d'écartement (15) qui, dans ledit arrangement (1) ou ledit élément (10), doivent être arrangés entre lesdites poutres (11), lesdits lattages et/ou similaire et sont formés avec des surfaces d'attouchement (48) pour toucher lesdites poutres (11), lesdits lattages et/ou similaire, et une bride (49) ou similaire faisant saillie autour desdites surfaces d'attouchement (48).

11. Arrangement selon la revendication 10, caractérisé en ce que, dans ledit arrangement (1) ou ledit élément (10), ladite bride (49) est introduite dans des poutres extérieures (16, 61), des perchoirs (17) et des lattages de remplissement (18) avoisinants.

12. Arrangement selon l'une quelconque des revendications précédentes, caractérisé en ce que chaque élément (10) dans ledit arrangement (1) est supporté par des dispositifs porteurs de charge (65) reposant sur des dispositifs de maintien (34) et arrangé avant des paires de montants (4, 26, 28).

13. Arrangement selon la revendication 12, caractérisé en ce que lesdits dispositifs porteurs de charge (65) ont un dispositif de fixation (66) dans les parties extrêmes, par exemple sous la forme d'un profilé en forme de U ou similaire pour venir en prise avec au moins une partie d'un montant (4) positionné à proximité, et un ou plusieurs dispositifs de support (67) qui ont la forme d'un profilé en forme de U avec une partie de support (68) et des supports latéraux (69) ou consistant en trois ergots en saillie (71) ou similaire et avec un ergot (68) comme partie de support et deux ergots (69), qui sont positionnés un peu plus haut que la partie de support, comme supports latéraux.

14. Arrangement selon la revendication 1, 7, 9 ou 12, caractérisé en ce que lesdits montants (4) sont formés ou sont susceptibles d'être pourvus de dispositifs de maintien (34) pour le raccord d'au moins un élément (10) à un montant (4) ou arrangé dans ledit arrangement (1) pour le support dudit élément (10) par ledit cadre (2), lesdits dispositifs de maintien (34) consistant en des plaques, des profilés en tôle ou des éléments similaires, ancrés ou susceptibles d'être ancrés dans lesdits montants (4).

15. Arrangement selon la revendication 1 ou 14, caractérisé en ce que lesdits dispositifs de maintien (34) font saillie de montants (4), entre des montants (4) arrangés l'un après l'autre, avec des profilés d'extension ou, dans les cas d'intérêts, destinés à faire saillie de montants (4) dans au moins deux directions.

16. Arrangement selon la revendication 1, 7, 9, 14 ou 15, caractérisé en ce que lesdits montants (4) sont formés avec ou sont susceptibles d'être pourvus de dispositifs de maintien (34), qui ont deux tiges (58, 59) s'étendant dans des directions opposées à partir d'un corps (62) sous la forme d'un profilé, ledit élément (10) étant arrangé afin de reposer sur le bord libre (72) d'une tige (58), tandis que l'autre tige (59) est accouplée à au moins deux montants (4) avoisinants.

17. Arrangement selon la revendication 16, caractérisé en ce que ledit élément (10) reste librement sur ledit bord libre (72) desdits dispositifs de maintien (34) et, de ce fait, est susceptible d'être facilement enlevé dudit arrangement (1).

18. Arrangement selon la revendication 1, 7, 9, 14, 15 ou 16, caractérisé en ce que lesdits montants (4) sont formés avec ou sont susceptibles d'être pourvus de dispositifs de maintien (34), présentant des éléments de raccord (23, 24), par exemple sous la forme de dispositifs de prise en forme de trou de serrure, pour des premier et second éléments de supports (13, 14) ou un second élément de raccord (23, 36) pour venir en prise ou être amené à travers un premier élément de support (13), par exemple pour un transporteur ou un équipment transporteur, susceptible d'être arrangé dans ledit arrangement (1) en-dessous d'un plancher (3) pour la collection et le transport de fumier et d'autres déchets à partir dudit plancher.

19. Arrangement selon la revendication 1, caractérisé en ce que lesdits dispositifs de raccord (12) pour lesdites poutres (11), lesdits lattages et/ou similaire sont arrangés pour supporter des éléments de maintien (20) pour au moins un premier, mais de préférence également pour un second élément de support (13, 14), ou qu'un élément (10) est arrangé pour supporter au moins un premier, mais de préférence également au moins un second élément de support (13, 14) qui, dans ledit arrangement (1), sont reliés audit élément (10) par des éléments de maintien (20), qui sont arrangés ou susceptibles d'être arrangés dans ledit dispositif de raccord (12).

20. Arrangement selon la revendication 1, 18 ou 19, caractérisé en ce que, sous au moins un plancher (3) ou un élément (10), est arrangé, dans ledit arrangement (1), un transporteur ou un équipement tranporteur pour la collection de fumier ou d'autres déchets, ledit transporteur ou ledit équipement transporteur étant agencé afin de s'étendre autour de rouleaux dont au moins un rouleau (51) est formé avec un boîtier (53) qui est conformé avec des ouvertures (55) à une spirale (57) ou vis arrangée à l'intérieur de la surface cylindrique ou du rouleau (51).

21. Arrangement selon la revendication 1, caractérisé en ce qu'au moins deux cadres (2) avec des planchers (3) ou éléments (10) ou unités d'éléments (10) devraient être utilisés dans ledit arrangement (1), et lesdits cadres (2) sont destinés à être reliés l'un à l'autre, avec, dans deux cadres reliés, des montants (2, 26) le long d'un côté (31) ou d'un côté extérieur dudit plancher (3) arrangés comme support vers ledit fondement, tandis que l'extrémité inférieure ou une partie d'extrémité (8) desdits montants (4, 28) le long de l'autre côté (32) ou d'un côté intérieur dudit plancher (3) est arrangé à l'écart dudit fondement.
